# EUROPEAN PATENT APPLICATION

(11) **EP 4 412 264 A1**
(43) Date of publication of application: **07.08.2024**
(21) Application number: 21958718.5
(22) Date of filing: 29.09.2021
(51) Int. Cl.: H04W 4/80, H04B 5/00

(54) **DATA TRANSMISSION METHOD AND APPARATUS**

(71) Applicant: Huawei Technologies Co., Ltd., Shenzhen, Guangdong 518129 (CN)
(72) Inventor: XIE, Zichen, Shenzhen, Guangdong 518129 (CN); WANG, Rong, Shenzhen, Guangdong 518129 (CN)
(74) Representative: Maiwald GmbH
(86) International application number: PCT/CN2021/121620
(87) International publication number: WO 2023/050128

(57) **Abstract**

This application discloses a data transmission method and apparatus, and relates to the field of short-range wireless communication technologies. In this application, a master device transmits data with at least two slave devices based on an event cycle. Each event cycle includes a first sub-cycle and a second sub-cycle. In the first sub-cycle, the master device transmits data to each slave device, and receives indication information fed back by each slave device based on a data receiving status of the slave device. A retransmission slot is dynamically configured for each slave device in the second sub-cycle based on the indication information of the slave device in the first sub-cycle, so that retransmission slots corresponding to all slave devices in the second sub-cycle can be consecutive slots, and remaining slots in the second sub-cycle are also consecutive slots. This helps effectively use the remaining slots and reduce a waste of air interface resources.

## Description

### TECHNICAL FIELD

This application relates to the field of short-range wireless communication technologies, and specifically, to a data transmission method and apparatus.

### BACKGROUND

In recent years, with development of wireless communication technologies, electronic devices that provide a Bluetooth wireless communication function are gradually popularized. Electronic devices such as a mobile phone, a vehicle-mounted terminal, and a wearable terminal can all provide the Bluetooth wireless communication function. For example, a Bluetooth chip is disposed in the mobile phone, and the mobile phone may transmit an audio signal to a Bluetooth earphone by using the Bluetooth chip, to implement a function of playing music by using the Bluetooth earphone.

Data transmission is performed, according to a Bluetooth low energy (Bluetooth low energy, BLE) protocol, between devices, such as the mobile phone and the Bluetooth earphone, that have the Bluetooth wireless communication function. A pair of earphones usually includes two Bluetooth earphones. Currently, when data transmission is performed according to the BLE protocol, the two Bluetooth earphones transmit data with the mobile phone based on a set event (event) cycle. In one event cycle, the two Bluetooth earphones transmit the data with the mobile phone in transmission slots respectively corresponding to the two Bluetooth earphones. In one event cycle, quantities of transmission slots of the two Bluetooth earphones are the same.

The two Bluetooth earphones are respectively a first earphone and a second earphone. For example, in one event cycle, the mobile phone performs data new transmission and data retransmission with the first earphone in a transmission slot of the first earphone, and performs data new transmission and data retransmission with the second earphone in a transmission slot of the second earphone. Data new transmission is initial transmission of any piece of audio data, and data retransmission is non-initial transmission of the audio data.

In one event cycle, the transmission slots respectively corresponding to the two Bluetooth earphones are preset and fixed. Therefore, if transmission quality of a communication channel corresponding to one Bluetooth earphone is good, and an amount of audio data that needs to be retransmitted by the Bluetooth earphone is small, some transmission slots are left, and the remaining transmission slots are referred to as air interfaces. Because the remaining transmission slots cannot be effectively used, a large quantity of air interface resources are wasted.

### SUMMARY

Embodiments of this application provide a data transmission method and apparatus, to reduce a waste of air interface resources.

According to a first aspect, an embodiment of this application provides a data transmission method. The method includes: A master device separately transmits data to at least two slave devices in a plurality of first slots of a first sub-cycle of an event cycle, receives indication information fed back by each of the at least two slave devices based on a data receiving status, and selectively configures a retransmission slot for each of the at least two slave devices based on the received indication information in a plurality of second slots of a second sub-cycle of the event cycle. For example, any one of the at least two slave devices is referred to as a first slave device. At least one of the plurality of second slots is configured as a retransmission slot of the first slave device if it is determined, based on indication information fed back by the first slave device, that there is data that is not successfully received by the first slave device.

In this embodiment of this application, the master device transmits the data with the at least two slave devices based on the event cycle. Each event cycle includes the first sub-cycle and the second sub-cycle. In the first sub-cycle, the master device transmits data to each slave device in a preconfigured transmission slot corresponding to the slave device, and receives indication information fed back by each slave device based on a data receiving status of the slave device. A retransmission slot is dynamically configured for each slave device in the second sub-cycle based on the indication information of the slave device in the first sub-cycle, so that retransmission slots corresponding to all slave devices in the second sub-cycle can be consecutive slots in comparison with a conventional technology in which transmission slots corresponding to all slave devices in an event cycle are preset fixed slots. This helps reduce a waste of air interface resources.

For example, for any one of the at least two slave devices, if indication information fed back by the slave device indicates that there is data that is not successfully received by the slave device, a retransmission slot is configured for the slave device in the second sub-cycle; or if indication information fed back by the slave device indicates that there is no data that is not successfully received by the slave device, no retransmission slot needs to be configured for the slave device in the second sub-cycle. In the second sub-cycle, a second slot that is not configured for any slave device may be referred to as a remaining slot. A retransmission slot is dynamically configured for each slave device in the second sub-cycle, so that retransmission slots corresponding to all slave devices in the second sub-cycle can be consecutive slots, and remaining slots in the second sub-cycle are also consecutive slots. This helps effectively use the remaining slots and reduce a waste of air interface resources.

In a possible implementation, the master device may transmit communication control signaling to the at least two slave devices or transmit service data to a communication device other than the at least two slave devices in a remaining slot of the second sub-cycle. The remaining slot of the second sub-cycle is a second slot that is not configured for any one of the slave devices. For example, the master device may establish, with each of the at least two slave devices, a Bluetooth synchronous communication link used for data transmission. In the plurality of first slots of the first sub-cycle of the event cycle, the master device separately transmits data to the at least two slave devices through the Bluetooth synchronous communication link corresponding to each slave device. In the remaining slot of the second sub-cycle, the master device may transmit communication control signaling to one or more of the at least two slave devices through a Bluetooth asynchronous communication link, or the master device may transmit service data to another communication device through a Bluetooth asynchronous communication link. For example, when software in a smartwatch needs to be upgraded, an update data packet may be downloaded by using the master device. In this case, the smartwatch may be connected to the master device by using a Bluetooth chip, and establish a Bluetooth asynchronous communication link with the master device. The master device may send data in the update data packet to the smartwatch through the Bluetooth asynchronous communication link in an idle slot of the Bluetooth synchronous communication link, namely, the remaining slot of the second sub-cycle.

According to the foregoing method, utilization of air interface resources can be improved, so that the master device can be connected to more devices, and a capability of the master device to send more service data is improved. This facilitates coexistence between a plurality of devices.

In a possible implementation, the master device sets a retransmission data queue for each slave device. The master device separately transmits data for new transmission by using the at least two slave devices in the plurality of first slots of the first sub-cycle of the event cycle, and receives the indication information fed back by each of the at least two slave devices based on the data receiving status of the slave device. Any one of the at least two slave devices is referred to as a first slave device. Data that is not successfully received by the first slave device is stored in the first retransmission data queue if it is determined, based on indication information fed back by the first slave device, that there is the data that is not successfully received by the first slave device. A data amount of first retransmission data stored in the first retransmission data queue is obtained. Some of the plurality of second slots are configured as retransmission slots of the first slave device based on the data amount of the first retransmission data.

A retransmission data queue is set for each slave device. In this way, a retransmission slot may be accurately allocated to each slave device in the second sub-cycle based on an amount of data that needs to be retransmitted in a retransmission data queue corresponding to the slave device. This avoids a waste of air interface resources caused by configuring an excessively large quantity of retransmission slots for each slave device.

In a possible implementation, the master device separately transmits the data to the at least two slave devices in the plurality of first slots of the first sub-cycle of the event cycle in a serial manner. Retransmission slots separately configured for the at least two slave devices in the plurality of second slots of the second sub -cycle are arranged in the serial manner. For example, in the first sub-cycle of the event cycle, the master device separately transmits the data to the first slave device and a second slave device in the serial manner. It is assumed that the first sub-cycle includes 2K first slots, where the first K adjacent slots are used to transmit the data to the first slave device, and the last K adjacent slots are used to transmit the data to the second slave device. In the plurality of second slots of the second sub-cycle, if M first retransmission slots are configured for the first slave device, and N second retransmission slots are configured for the second slave device, where the M first retransmission slots and the N second retransmission slots do not overlap, and the 1^{st} slot in the M first retransmission slots is the 1^{st} slot of the second sub-cycle, the last slot in the M first retransmission slots and the 1^{st} slot in the N second retransmission slots are adjacent slots.

In another possible implementation, the master device separately transmits the data to the at least two slave devices in the plurality of first slots of the first sub-cycle of the event cycle in an interleaved manner. Retransmission slots separately configured for the at least two slave devices in the plurality of second slots of the second sub-cycle are arranged in the interleaved manner. For example, in the first sub-cycle of the event cycle, the master device separately transmits the data to the first slave device and a second slave device in the interleaved manner. It is assumed that the first sub-cycle includes 2K first slots. The data is transmitted to the first slave device in K first new transmission slots corresponding to the first slave device, and the data is transmitted to the second slave device in the other K second new transmission slots corresponding to the second slave device. The K first new transmission slots and the K second new transmission slots are arranged at intervals. In the plurality of second slots of the second sub-cycle, it is assumed that M first retransmission slots are configured for the first slave device, and N second retransmission slots are configured for the second slave device, where M is less than N. In this case, the M first retransmission slots obtained through configuration and M second retransmission slots in the N second retransmission slots obtained through configuration are arranged at intervals, and N-M second retransmission slots in the N second retransmission slots are adjacent slots.

Compared with a conventional technology in which a transmission slot corresponding to each slave device in each event cycle is a preset fixed parameter, in this embodiment of this application, in the second sub-cycle, a retransmission slot is configured for each slave device based on a data receiving status of the slave device in the first sub-cycle, and retransmission slots corresponding to all slave devices are arranged in the serial manner or the interleaved manner, so that all retransmission slots in the second sub-cycle are consecutive slots, and remaining slots in the second sub-cycle are also consecutive slots. This helps effectively use the remaining slots.

According to a second aspect, an embodiment of this application provides a data transmission method. The method includes: In a first sub-cycle of an event cycle, in a first slot corresponding to a first slave device, the first slave device receives data sent by a master device and feeds back indication information to the master device based on a data receiving status, so that the master device selectively configures a retransmission slot for the first slave device in a plurality of second slots of a second sub-cycle of the event cycle. If the indication information includes first-type indication information, data monitoring is continuously performed in the plurality of second slots of the second sub-cycle of the event cycle, and retransmission data sent by the master device is detected in at least one second slot. The first-type indication information indicates that there is data that is not successfully received by the first slave device, and the at least one second slot is a retransmission slot configured by the master device for the first slave device based on the indication information fed back by the first slave device. If the indication information does not include first-type indication information, the first slave device does not need to perform data monitoring in the second sub-cycle, and the first slave device may disable data monitoring in the plurality of second slots of the second sub-cycle of the event cycle, to reduce power consumption.

According to a third aspect, an embodiment of this application further provides a data transmission apparatus, including a transceiver and a processor. The transceiver is configured to: under control of the processor, separately transmit data to at least two slave devices in a plurality of first slots of a first sub-cycle of an event cycle, and receive indication information fed back by each of the at least two slave devices based on a data receiving status. The processor is configured to selectively configure a retransmission slot for each of the at least two slave devices based on the received indication information in a plurality of second slots of a second sub-cycle of the event cycle.

In a possible implementation, the processor is specifically configured to configure at least one of the plurality of second slots as a retransmission slot of a first slave device if determining, based on indication information fed back by the first slave device, that there is data that is not successfully received by the first slave device, where the first slave device is any one of the at least two slave devices.

In a possible implementation, the transceiver is further configured to transmit communication control signaling to the at least two slave devices or transmit service data to a communication device other than the at least two slave devices in a remaining slot of the second sub-cycle, where the remaining slot is a second slot that is not configured for any one of the slave devices.

In a possible implementation, the processor is specifically configured to: store, in a first retransmission data queue, the data that is not successfully received by the first slave device if determining, based on the indication information fed back by the first slave device, that there is the data that is not successfully received by the first slave device; obtain a data amount of first retransmission data stored in the first retransmission data queue; and configure the at least one of the plurality of second slots as the retransmission slot of the first slave device based on the data amount of the first retransmission data.

In a possible implementation, the transceiver is specifically configured to: separately send audio data to the at least two slave devices in the plurality of first slots in a serial manner or an interleaved manner.

In a possible implementation, if the transceiver separately transmits the data to the at least two slave devices in the plurality of first slots in the serial manner, retransmission slots separately configured by the processor for the at least two slave devices in the plurality of second slots are arranged in the serial manner.

In a possible implementation, if the transceiver separately transmits the data to the at least two slave devices in the plurality of first slots in the interleaved manner, retransmission slots separately configured by the processor for the at least two slave devices in the plurality of second slots are arranged in the interleaved manner.

In a possible implementation, the transceiver is further configured to establish, with each of the at least two slave devices, a Bluetooth synchronous communication link used for data transmission before separately transmitting the data to the at least two slave devices in the plurality of first slots of the first sub-cycle of the event cycle.

According to a fourth aspect, an embodiment of this application further provides a data transmission apparatus, including a transceiver and a processor. The transceiver is configured to: in a first sub-cycle of an event cycle, in a first slot corresponding to the data transmission apparatus, receive, under control of the processor, data sent by a master device. The processor is configured to generate, based on a data receiving status, indication information fed back to the master device. The transceiver is further configured to: send the indication information to the master device; and when the indication information includes first-type indication information, continuously perform data monitoring in a plurality of second slots of a second sub-cycle of the event cycle, and detect, in at least one second slot, retransmission data sent by the master device; and continuously perform data monitoring in the plurality of the second slots of the second sub-cycle of the event cycle, and detect, in the at least one second slot, the retransmission data sent by the master device, where the at least one second slot is a retransmission slot configured by the master device for the data transmission apparatus based on the indication information fed back by the data transmission apparatus, and the first-type indication information indicates that there is data that is not successfully received by the data transmission apparatus.

According to a fifth aspect, an embodiment of this application further provides a data transmission apparatus. The data transmission apparatus includes corresponding function modules, configured to implement steps in the method provided in the first aspect. For details, refer to detailed descriptions in the method examples. Details are not described herein again. The functions may be implemented by hardware, or may be implemented by executing corresponding software by hardware. The hardware or the software includes one or more modules corresponding to the foregoing functions. For example, the data transmission apparatus may include a sending unit, a receiving unit, and a configuration unit. The sending unit is configured to separately transmit data to at least two slave devices in a plurality of first slots of a first sub-cycle of an event cycle. The receiving unit is configured to receive indication information fed back by each of the at least two slave devices based on a data receiving status. The configuration unit is configured to selectively configure a retransmission slot for each of the at least two slave devices in a plurality of second slots of a second sub-cycle of the event cycle based on the indication information.

According to a sixth aspect, an embodiment of this application further provides a data transmission apparatus. The data transmission apparatus includes corresponding function modules, configured to implement steps in the method provided in the first aspect. For details, refer to detailed descriptions in the method examples. Details are not described herein again. The functions may be implemented by hardware, or may be implemented by executing corresponding software by hardware. The hardware or the software includes one or more modules corresponding to the foregoing functions. For example, the data transmission apparatus may include a first monitoring unit and a second monitoring unit. The first monitoring unit is configured to: in a first sub-cycle of an event cycle, in a first slot corresponding to a first slave device, receive data sent by a master device, and feed back indication information to the master device based on a data receiving status. The second monitoring unit is configured to: if the indication information includes first-type indication information, continuously perform data monitoring in a plurality of second slots of a second sub-cycle of the event cycle, and detect, in at least one second slot, retransmission data sent by the master device, where the at least one second slot is a retransmission slot configured by the master device for the first slave device based on the indication information fed back by the first slave device, and the first-type indication information indicates that there is data that is not successfully received by the first slave device.

According to a seventh aspect, an embodiment of this application further provides a data transmission system, including any data transmission apparatus provided in the third aspect and at least two data transmission apparatuses provided in the fourth aspect.

According to an eighth aspect, this application provides a computer-readable storage medium. The computer-readable storage medium stores a computer program or instructions. When the computer program or the instructions are executed by a terminal device, the terminal device is enabled to perform any method provided in the first aspect or the method provided in the second aspect.

According to a ninth aspect, this application provides a computer program product. The computer program product includes a computer program or instructions. When the computer program or the instructions are executed by a terminal device, any method provided in the first aspect or the method provided in the second aspect is implemented.

For technical effects that can be achieved in any one of the third aspect to the ninth aspect, refer to the descriptions of beneficial effects in the first aspect or the second aspect. Details are not described herein again.

### BRIEF DESCRIPTION OF DRAWINGS

FIG. 1 is a schematic diagram of an application scenario according to an embodiment of this application;
FIG. 2 is a diagram of interaction between a mobile phone and two Bluetooth earphones according to an embodiment of this application;
FIG. 3A and FIG. 3B are a schematic diagram of an arrangement manner of all slots included in one event cycle according to an embodiment of this application;
FIG. 4A and FIG. 4B are a schematic diagram of another arrangement manner of all slots included in one event cycle according to an embodiment of this application;
FIG. 5 is a flowchart of a data transmission method according to an embodiment of this application;
FIG. 6 is a flowchart of another data transmission method according to an embodiment of this application;
FIG. 7 is a schematic diagram of an example of a data transmission apparatus according to an embodiment of this application;
FIG. 8 is a schematic diagram of another example of a data transmission apparatus according to an embodiment of this application; and
FIG. 9 is a schematic diagram of another example of a data transmission apparatus according to an embodiment of this application.

### DESCRIPTION OF EMBODIMENTS

To make the objectives, technical solutions, and advantages of embodiments of this application clearer, the following describes embodiments of this application in detail with reference to the accompanying drawings. Terms used in embodiments of this application are only used to explain specific embodiments of this application, but are not intended to limit this application. It is clear that the described embodiments are merely some rather than all of embodiments of this application. All other embodiments obtained by a person of ordinary skill in the art based on embodiments of this application without creative efforts shall fall within the protection scope of this application.

Before specific solutions provided in embodiments of this application are described, some terms in this application are usually explained and described, to facilitate understanding of a person skilled in the art. The terms in this application are not limited.
(1) A BLE protocol is also referred to as a Bluetooth low energy protocol, and is a short-range wireless communication protocol for data transmission between electronic devices that have a Bluetooth wireless communication function. The BLE protocol may include a connected isochronous stream (connected isochronous stream, CIS) protocol for point-to-point communication, and a corresponding connected isochronous group (connected isochronous group, CIG) protocol including a plurality of channels of CISs. A characteristic of the BLE protocol is that encoded audio data is sent for a limited quantity of times within a fixed communication interval. The communication interval is referred to as an event cycle in embodiments of this application.
(2) A new transmission slot is a slot used to perform initial transmission on audio data, that is, a slot used for data new transmission.
(3) A retransmission slot is a slot used to perform non-initial transmission on audio data, that is, a slot used for data retransmission.

In embodiments of this application, "a plurality of" means two or more. In view of this, in embodiments of this application, "a plurality of" may also be understood as "at least two". "At least one" may be understood as one or more, for example, one, two, or more. For example, "include at least one" means "include one, two, or more", and there is no limitation on which is included. For example, "include at least one of A, B, and C" may mean "include A, B, or C", "include A and B, A and C, or B and C", or "include A, B, and C". The term "and/or" describes an association relationship for describing associated objects and represents that three relationships may exist. For example, A and/or B may represent the following three cases: Only A exists, both A and B exist, and only B exists. In addition, the character "/" usually indicates an "or" relationship between the associated objects if there is no specific description.

Unless otherwise specified, ordinal numbers such as "first" and "second" in embodiments of this application are used to distinguish between a plurality of objects, and are not intended to limit a sequence, a time sequence, priorities, or importance of the plurality of objects.

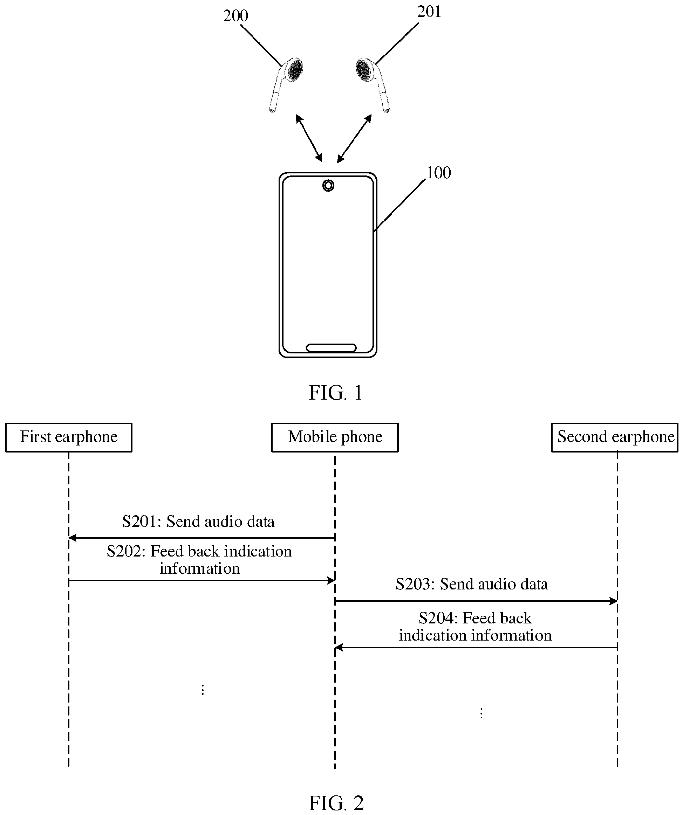

A typical application scenario of embodiments of this application is shown in FIG. 1. A master device 100 establishes short-range wireless communication connections to a first slave device 200 and a second slave device 201 through Bluetooth wireless communication links, to perform wireless data transmission within a short distance. The Bluetooth wireless communication link may include a Bluetooth synchronous communication link, for example, a CIS link according to a CIS protocol, and may further include a Bluetooth asynchronous communication link, for example, an asynchronous connection link (asynchronous connection link, ACL). For example, the master device 100 may establish the Bluetooth wireless communication connection to the first slave device 200 through a first CIS link, and establish the Bluetooth wireless communication connection to the second slave device 201 through a second CIS link. The first slave device 200 and the second slave device 201 may receive audio data from the master device 100 according to a short-range wireless communication protocol, to play the audio data. The short-range wireless communication protocol may be a BLE protocol.

The application scenario shown in FIG. 1 includes the master device 100 and the two slave devices. In some other application scenarios, the master device 100 may establish short-range wireless communication connections to more slave devices. A quantity of slave devices is not limited in embodiments of this application.

The master device 100 shown in FIG. 1 is a mobile phone in which a Bluetooth chip is disposed. In some other embodiments, the master device may alternatively be another audio source device that provides a Bluetooth wireless communication function, for example, an electronic device such as a vehicle-mounted terminal, a wearable terminal, a personal digital assistant (personal digital assistant, PDA), a television, or a computer.

The first slave device 200 and the second slave device 201 shown in FIG. 1 are Bluetooth earphones, and may also be referred to as two true wireless stereo (true wireless stereo, TWS) Bluetooth earphones. In some other embodiments, the first slave device 200 and the second slave device 201 may alternatively be audio playing devices that have a Bluetooth wireless communication function, for example, loudspeakers or sound boxes. For example, the first slave device 200 may be an audio-left channel device in binaural audio playing equipment, the second slave device 201 may be an audio-right channel device in the binaural audio playing equipment. The binaural audio playing equipment may be a stereo earphone, a stereo vehicle-mounted sound device, a stereo home sound device, or the like.

To describe a data transmission method provided in embodiments of this application more clearly, the following describes embodiments of this application in detail by using an example in which a master device is a mobile phone and two slave devices are Bluetooth earphones. However, it should not be understood as that, in the data transmission method provided in embodiments of this application, the mobile phone necessarily serves as the master device to transmit data to the Bluetooth earphones, it should not be understood as that the Bluetooth earphones necessarily serve as the slave devices to receive the data transmitted by the master device, and it should not be understood as that there are only two slave devices.

FIG. 2 is a flowchart of interaction between a mobile phone and Bluetooth earphones during data transmission. Both a first earphone and a second earphone in FIG. 2 are Bluetooth earphones. Before data transmission, the mobile phone establishes, with each of the first earphone and the second earphone, a Bluetooth synchronous communication link used for data transmission.

For example, when a user expects to listen to, by using the Bluetooth earphone, a song or another audio played by the mobile phone, the user may enable a Bluetooth function of the mobile phone. The mobile phone establishes connections to the first earphone and the second earphone by using a Bluetooth chip, to be specific, establishes the Bluetooth synchronous communication link with each of the first earphone and the second earphone. The Bluetooth synchronous communication link may be a CIS link. Specifically, according to a BLE protocol, the mobile phone may establish a first CIS link with the first earphone, and establish a second CIS link with the second earphone. The first CIS link and the second CIS link form a CIG.

The mobile phone may first establish, with the first earphone, the Bluetooth synchronous communication link used for data transmission, and then establish, with the second earphone, the Bluetooth synchronous communication link used for data transmission. Alternatively, the mobile phone may first establish, with the second earphone, the Bluetooth synchronous communication link used for data transmission, and then establish, with the first earphone, the Bluetooth synchronous communication link used for data transmission. A process in which the mobile phone establishes, with the first earphone, the Bluetooth synchronous communication link used for data transmission, and a process in which the mobile phone establishes, with the second earphone, the Bluetooth synchronous communication link used for data transmission may alternatively be performed simultaneously.

As shown in FIG. 2, a data transmission process between the mobile phone and the Bluetooth earphones may include the following steps.

S201: The mobile phone transmits audio data to the first earphone in a transmission slot configured for the first earphone.

S202: The first earphone feeds back indication information to the mobile phone based on a data receiving status.

S203: The mobile phone transmits audio data to the second earphone in a transmission slot configured for the second earphone.

S204: The second earphone feeds back indication information to the mobile phone based on a data receiving status.

For example, the mobile phone transmits the data with the first earphone and the second earphone according to the BLE protocol. In other words, the mobile phone transmits the data with the two Bluetooth earphones based on a set event cycle. For example, for an event cycle, the mobile phone may determine duration of the event cycle based on a data amount of data that needs to be transmitted to the first earphone and the second earphone in the event cycle. In other words, the mobile phone may determine a total quantity of sending times based on a size of a data packet that needs to be transmitted to the first earphone and the second earphone in the event cycle, and determine, based on the total quantity of sending times, a total quantity of transmission slots included in the event cycle.

In this embodiment of this application, one event cycle includes a first sub-cycle and a second sub-cycle. The first sub-cycle includes a plurality of first slots. Some of the first slots are used for data transmission between the mobile phone and the first earphone, and the other first slots are used for data transmission between the mobile phone and the second earphone. The second sub-cycle includes a plurality of second slots. Further, the first sub-cycle is used to perform new transmission on the data, in other words, perform initial transmission on the data. The first slot may also be referred to as a new transmission slot. Certainly, the first slot may also have another name. This is not specifically limited in this application. The second sub-cycle is used to retransmit data that is not successfully transmitted and that is in the data transmitted in the first sub-cycle. The second slot may also be referred to as a retransmission slot. Certainly, the second slot may also have another name. This is not specifically limited in this application.

In the first sub-cycle, the two Bluetooth earphones transmit the data with the mobile phone in new transmission slots corresponding to the two Bluetooth earphones. Specifically, the mobile phone transmits the data to the first earphone in the new transmission slot corresponding to the first earphone. The first earphone receives the data sent by the mobile phone, and feeds back the indication information to the mobile phone based on the data receiving status. The mobile phone receives the indication information fed back by the first earphone based on the data receiving status. The mobile phone transmits the data to the second earphone in the new transmission slot corresponding to the second earphone. The second earphone receives the data sent by the mobile phone, and feeds back the indication information to the mobile phone based on the data receiving status. The mobile phone receives the indication information fed back by the second earphone based on the data receiving status.

Further, the mobile phone selectively configures a retransmission slot for each of the first earphone and the second earphone in the plurality of second slots of the second sub-cycle of the event cycle based on the indication information fed back by the first earphone and the second earphone. For example, the mobile phone selectively configures the retransmission slot for the first earphone in the plurality of second slots of the second sub-cycle of the event cycle based on the indication information fed back by the first earphone. For example, the mobile phone stores, in a first retransmission data queue, the data that is not successfully received by the first earphone if determining, based on the indication information fed back by the first earphone, that there is data that is not successfully received by the first earphone. The mobile phone obtains a data amount of first retransmission data stored in the first retransmission data queue, and configures some of the plurality of second slots as retransmission slots of the first earphone based on the data amount of the first retransmission data. In addition, the mobile phone selectively configures the retransmission slot for the second earphone in the plurality of second slots of the second sub-cycle of the event cycle based on the indication information of the second earphone. For example, the mobile phone stores, in a second retransmission data queue, the data that is not successfully received by the second earphone if determining, based on the indication information fed back by the second earphone, that there is data that is not successfully received by the second earphone. The mobile phone obtains a data amount of second retransmission data stored in the second retransmission data queue, and configures some of the plurality of second slots as retransmission slots of the second earphone based on the data amount of the second retransmission data.

The foregoing event cycle may also be referred to as a CIG event. The mobile phone serves as a master device, and is represented by G in the following. The first earphone serves as a first slave device, and is represented by T1 in the following. The second earphone serves as a second slave device, and is represented by T2 in the following.

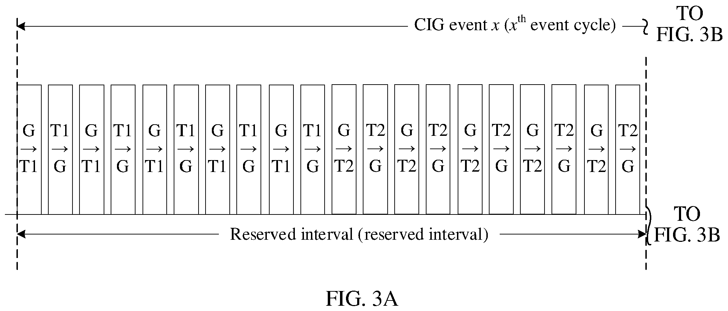

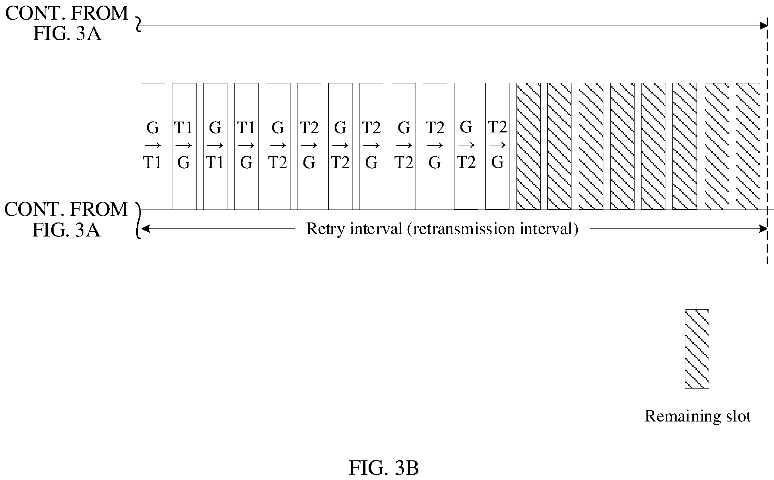

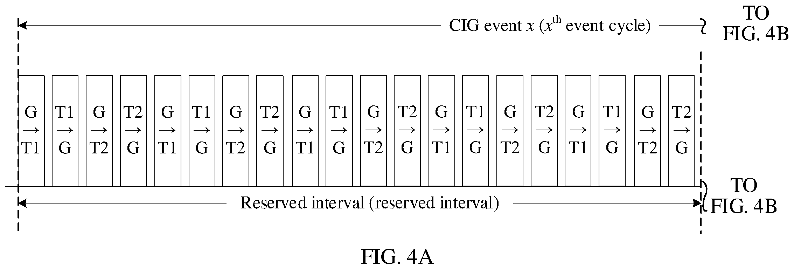

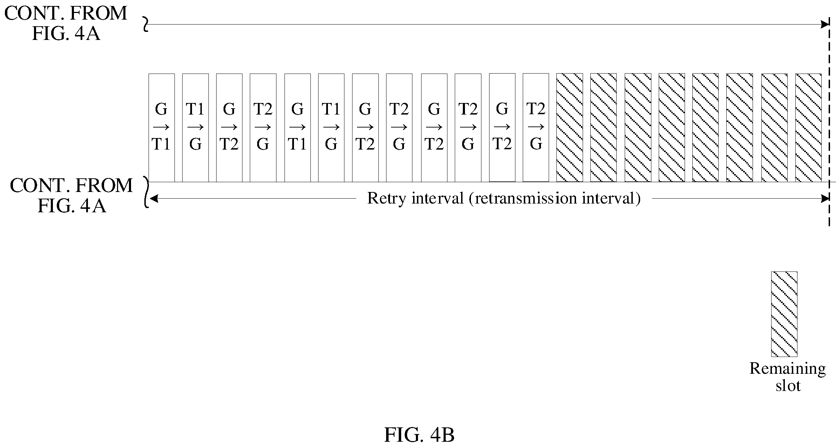

In some embodiments, as shown in FIG. 3A and FIG. 3B and FIG. 4A and FIG. 4B, any event cycle CIG event x includes a first sub-cycle and a second sub-cycle. The first sub-cycle may be referred to as a reserved interval (reserved interval), and the second sub-cycle may be referred to as a retransmission interval (retry interval). The first sub-cycle includes a plurality of new transmission slots, and a quantity of new transmission slots in the first sub-cycle may be preset. For example, the mobile phone may set duration of the first sub-cycle based on a data amount of audio data that needs to be transmitted. In other words, the mobile phone may set the quantity of new transmission slots included in the first sub-cycle.

In the plurality of new transmission slots in the first sub-cycle, the mobile phone may separately send the audio data to the first earphone and the second earphone in a serial manner or an interleaved manner.

In a possible example, the mobile phone sends the audio data to the two earphones in the new transmission slots in the serial manner. The mobile phone may send same audio data to the first earphone and the second earphone. Assuming that the first sub-cycle includes 2K new transmission slots, in the first sub-cycle, in K first new transmission slots corresponding to the first mobile phone, the mobile phone sends the audio data to the first earphone, and receives indication information fed back by the first earphone based on a data receiving status; in K second new transmission slots corresponding to the second mobile phone, the mobile phone sends the audio data to the second earphone, and receives indication information fed back by the first earphone based on a data receiving status. The K first new transmission slots are adjacent slots, and the K second new transmission slots are adjacent slots. The first new transmission slots and the second new transmission slots do not overlap.

For example, the first sub-cycle includes 10 new transmission slots. As shown in FIG. 3A and FIG. 3B, the first five new transmission slots in the 10 new transmission slots are first new transmission slots corresponding to a first mobile phone T1. In the five first new transmission slots, a mobile phone G sends audio data to the first earphone T1 through a first CIS link, and this is represented as G-T I in FIG. 3A and FIG. 3B. The first earphone T1 monitors the first CIS link in the five first new transmission slots, receives the audio data sent by the mobile phone G, and feeds back indication information to the mobile phone G based on a data receiving status, and this is represented as T1→G in FIG. 3A and FIG. 3B. In any first new transmission slot, if the first earphone T1 receives the audio data sent by the mobile phone G, and the received audio data is correct, the indication information sent by the first earphone T1 to the mobile phone G includes ACK information, indicating that the first earphone T1 successfully receives the audio data in the first new transmission slot; or if the first earphone T1 receives the audio data sent by the mobile phone G, but the data is incorrect and does not passes verification, or the first earphone T1 receive s no audio data sent by the mobile phone G, the indication information sent by the first earphone T1 to the mobile phone G includes NACK information, indicating that the first earphone T1 does not successfully receive the audio data in the first new transmission slot. The mobile phone G receives the indication information fed back by the first earphone T1. In any first new transmission slot, if the indication information received by the mobile phone G includes the ACK information, the audio data transmitted in the first new transmission slot does not need to be stored in a first retransmission data queue; or if the indication information received by the mobile phone G includes the NACK information, the audio data transmitted in the first new transmission slot is stored in a first retransmission data queue.

If all indication information that is fed back by the first earphone T1 and that is received by the mobile phone G in the first sub-cycle includes the ACK information, none of audio data needs to be retransmitted, and no audio data needs to be stored in the first retransmission data queue. The first retransmission data queue may be null. To be specific, a data amount of first retransmission data in the first retransmission data queue is 0.

The last five new transmission slots in the 10 new transmission slots are second new transmission slots corresponding to a second mobile phone T2. In the five second new transmission slots, the mobile phone G sends audio data to the second earphone T2 through a second CIS link, and this is represented as G→T2 in FIG. 3A and FIG. 3B. The second earphone T2 monitors the second CIS link in the five second new transmission slots, receives the audio data sent by the mobile phone G, and feeds back indication information to the mobile phone G based on a data receiving status, and this is represented as T2→G in FIG. 3A and FIG. 3B. In any second new transmission slot, if the second earphone T2 receives the audio data sent by the mobile phone G, and the received audio data is correct, the indication information sent by the second earphone T2 to the mobile phone G includes ACK information, indicating that the second earphone T2 successfully receives the audio data in the second new transmission slot; or if the second earphone T2 receives the audio data sent by the mobile phone G, but the data is incorrect and does not passes verification, or the second earphone T2 receives no audio data sent by the mobile phone G, the indication information sent by the second earphone T2 to the mobile phone G includes NACK information, indicating that the second earphone T2 does not successfully receive the audio data in the second new transmission slot. The mobile phone G receives the indication information fed back by the second earphone T2. In any second new transmission slot, if the indication information received by the mobile phone G includes the ACK information, the audio data transmitted in the second new transmission slot does not need to be stored in a second retransmission data queue; or if the indication information received by the mobile phone G includes the NACK information, the audio data transmitted in the second new transmission slot is stored in a second retransmission data queue.

If all indication information that is fed back by the second earphone T2 and that is received by the mobile phone G in the first sub-cycle includes the ACK information, none of audio data needs to be retransmitted, and no audio data needs to be stored in the second retransmission data queue. The second retransmission data queue may be null. To be specific, a data amount of second retransmission data in the second retransmission data queue is 0.

The second sub-cycle may include a plurality of second slots. A quantity of second slots included in the second sub-cycle may alternatively be preset, and a setting manner is the same as that of the first sub-cycle. The mobile phone may alternatively set, based on a data amount of audio data that needs to be transmitted, the quantity of second slots included in the second sub-cycle.

In this embodiment, it is assumed that the quantity of slots included in the second sub-cycle is the same as that of the first sub-cycle. To be specific, the second sub-cycle includes 2K second slots. In some other embodiments, the quantity of new transmission slots included in the first sub-cycle may alternatively be different from the quantity of second slots included in the second sub-cycle. In this embodiment of this application, in the 2K second slots of the second sub-cycle of the event cycle, the mobile phone G may selectively configure a retransmission slot for the first earphone T1 based on the data amount of the first retransmission data stored in the first retransmission data queue. Similarly, the mobile phone G may selectively configure a retransmission slot for the second earphone T2 based on the data amount of the second retransmission data stored in the second retransmission data queue. The retransmission slots separately configured by the mobile phone G for the first earphone T1 and the second earphone T2 in the 2K second slots are arranged in the serial manner.

In the second sub-cycle, a quantity of first retransmission slots configured for the first earphone T1 may be different from a quantity of second retransmission slots configured for the second earphone T2. For example, it is assumed that M first retransmission slots need to be configured for the first earphone T1 in the 2K second slots of the second sub-cycle based on the data amount of the first retransmission data stored in the first retransmission data queue, and N second retransmission slots need to be configured for the second earphone T2 in the 2K second slots of the second sub-cycle based on the data amount of the second retransmission data stored in the second retransmission data queue, where the M first retransmission slots and the N second retransmission slots do not overlap, and the 1^{st} slot in the M first retransmission slots is the 1^{st} slot of the second sub-cycle. In this case, the last slot in the M first retransmission slots and the 1^{st} slot in the N second retransmission slots are adjacent slots. If the data amount of the first retransmission data stored in the first retransmission data queue is 0, no retransmission slot needs to be configured for the first earphone T1 in the second sub-cycle, that is, M may be 0. If the data amount of the second retransmission data stored in the second retransmission data queue is 0, no retransmission slot needs to be configured for the second earphone T2 in the second sub-cycle, that is, N may be 0.

For example, assuming that the second sub-cycle includes 10 second slots, two first retransmission slots need to be configured for the first earphone T1 in the 10 second slots of the second sub-cycle based on the data amount of the first retransmission data, and four second retransmission slots need to be configured for the second earphone T2 in the 2K second slots of the second sub-cycle based on the data amount of the second retransmission data. As shown in FIG. 3A and FIG. 3B, the first two second slots in the 10 second slots are first retransmission slots, and the next four second slots are second retransmission slots. The two first retransmission slots and the four second retransmission slots are six consecutive slots, and there is no idle slot among the slots. In the first retransmission slots, the mobile phone G sends the first retransmission data to the first earphone T1 through the first CIS link. In the second retransmission slots, the mobile phone G sends the second retransmission data to the second earphone T2 through the first CIS link. In the 10 second slots of the second sub-cycle, after the retransmission slots are selectively configured for the first earphone T1 and the second earphone T2, four second slots are left. The four remaining slots are consecutive slots, and are referred to as remaining slots. The four remaining slots are consecutive slots.

The quantity of transmission slots included in the first sub-cycle, the quantity of transmission slots included in the second sub-cycle, and a quantity of remaining slots in the second sub-cycle are all examples for description. In practical use, there may be more remaining slots in one event cycle, and the remaining slots are all consecutive slots located at a tail of the event cycle. Therefore, the remaining slots are more advantageous for use.

In the second sub-cycle, the first earphone T1 cannot determine the retransmission slot corresponding to the first earphone T1. Therefore, if in the first sub-cycle, there is data that is not successfully received by the first earphone T1, in other words, at least one piece of the indication information fed back by the first earphone T1 to the mobile phone G includes the NACK information, the first earphone T1 continuously performs data monitoring on the first CIS link in the plurality of second slots of the second sub-cycle, and detects, in at least one second slot, retransmission data sent by the mobile phone G. The at least one second slot is a retransmission slot configured by the mobile phone G for the first earphone T1 based on the indication information fed back by the first earphone T1. If in the first sub-cycle, there is no data that is not successfully received by the first earphone T1, in other words, all of the indication information fed back by the first earphone T1 to the mobile phone G includes the ACK information, the first earphone T1 does not need to perform data monitoring on the first CIS link in the second sub-cycle, so that power consumption can be reduced.

In another possible example, the mobile phone sends the audio data to the two earphones in the new transmission slots in the interleaved manner. Optionally, the mobile phone may send same audio data to the first earphone and the second earphone. Assuming that the first sub-cycle includes 2K new transmission slots, in the first sub-cycle, in K first new transmission slots corresponding to the first mobile phone, the mobile phone sends the audio data to the first earphone, and receives indication information fed back by the first earphone based on a data receiving status; in K second new transmission slots corresponding to the second mobile phone, the mobile phone sends the audio data to the second earphone, and receives indication information fed back by the first earphone based on a data receiving status. The K first new transmission slots and the K second new transmission slots are arranged at intervals.

For example, the first sub-cycle includes 10 new transmission slots. As shown in FIG. 4A and FIG. 4B, in the 1^{st} new transmission slot, a mobile phone G sends audio data to a first earphone T1 through a first CIS link, and this is represented as G→T1 in FIG. 4A and FIG. 4B. The first earphone T1 monitors the first CIS link in the 1^{st} new transmission slot, receives the audio data sent by the mobile phone G, and feeds back indication information to the mobile phone G based on a data receiving status, and this is represented as T1→G in FIG. 4A and FIG. 4B. In the 2^{nd} new transmission slot, the mobile phone G sends audio data to a second earphone T2 through a second CIS link, and this is represented as G→T2 in FIG. 4A and FIG. 4B. The second earphone T2 monitors the second CIS link in the 2^{nd} new transmission slot, receives the audio data sent by the mobile phone G, and feeds back indication information to the mobile phone G based on a data receiving status, and this is represented as T2→G in FIG. 4A and FIG. 4B. In the 3^{rd} new transmission slot, the mobile phone G sends the audio data to the first earphone T1 through the first CIS link; in the 4^{th} new transmission slot, the mobile phone G sends the audio data to the second earphone T2 through the second CIS link; and so on. In the 10 new transmission slots of the first sub-cycle, a slot corresponding to the first earphone T1 may be referred to as a first new transmission slot, and a slot corresponding to the second earphone T2 may be referred to as a second new transmission slot.

In any first new transmission slot, if the first earphone T1 receives the audio data sent by the mobile phone G, and the received audio data is correct, the indication information sent by the first earphone T1 to the mobile phone G includes ACK information, indicating that the first earphone T1 successfully receives the audio data in the first new transmission slot; or if the first earphone T1 receives the audio data sent by the mobile phone G, but the data is incorrect and does not passes verification, or the first earphone T1 receives no audio data sent by the mobile phone G, the indication information sent by the first earphone T1 to the mobile phone G includes NACK information, indicating that the first earphone T1 does not successfully receive the audio data in the first new transmission slot. The mobile phone G receives the indication information fed back by the first earphone T1. In any first new transmission slot, if the indication information received by the mobile phone G includes the ACK information, the audio data transmitted in the first new transmission slot does not need to be stored in a first retransmission data queue; or if the indication information received by the mobile phone G includes the NACK information, the audio data transmitted in the first new transmission slot is stored in a first retransmission data queue.

Similarly, the mobile phone G stores, in a second retransmission data queue based on the indication information fed back by the second earphone T2, audio data that is not successfully received by the second earphone T2.

The second sub-cycle may include a plurality of second slots. A quantity of second slots included in the second sub-cycle may alternatively be preset, and a setting manner is the same as that of the first sub-cycle. The mobile phone may alternatively set, based on a data amount of audio data that needs to be transmitted, the quantity of second slots included in the second sub-cycle.

In this embodiment, it is assumed that the quantity of slots included in the second sub-cycle is the same as that of the first sub-cycle. To be specific, the second sub-cycle includes 2K second slots. In some other embodiments, the quantity of new transmission slots included in the first sub-cycle may alternatively be different from the quantity of second slots included in the second sub-cycle. In this embodiment of this application, in the 2K second slots of the second sub-cycle of the event cycle, the mobile phone G may selectively configure a retransmission slot for the first earphone T1 based on a data amount of first retransmission data stored in the first retransmission data queue. Similarly, the mobile phone G may selectively configure a retransmission slot for the second earphone T2 based on a data amount of second retransmission data stored in the second retransmission data queue. The retransmission slots separately configured by the mobile phone G for the first earphone T1 and the second earphone T2 in the 2K second slots are arranged in the interleaved manner.

In the second sub-cycle, a quantity of first retransmission slots configured for the first earphone T1 may be different from a quantity of second retransmission slots configured for the second earphone T2. For example, it is assumed that M first retransmission slots need to be configured for the first earphone T1 in the 2K second slots of the second sub-cycle based on the data amount of the first retransmission data stored in the first retransmission data queue, and N second retransmission slots need to be configured for the second earphone T2 in the 2K second slots of the second sub-cycle based on the data amount of the second retransmission data stored in the second retransmission data queue, where M is less than N. In this case, the M first retransmission slots obtained through configuration and M second retransmission slots in the N second retransmission slots obtained through configuration are arranged at intervals, and N-M second retransmission slots in the N second retransmission slots are adjacent slots.

For example, assuming that the second sub-cycle includes 10 second slots, two first retransmission slots need to be configured for the first earphone T1 in the 10 second slots of the second sub-cycle based on the data amount of the first retransmission data, and four second retransmission slots need to be configured for the second earphone T2 in the 2K second slots of the second sub-cycle based on the data amount of the second retransmission data. As shown in FIG. 4A and FIG. 4B, in the first four second slots of the 10 second slots, the first retransmission slots and the second retransmission slots are arranged at intervals. To be specific, two first retransmission slots and two second retransmission slots are arranged at intervals, and the next slots are two adjacent second retransmission slots. The two first retransmission slots and the four second retransmission slots are six consecutive slots, and there is no idle slot among the slots. In the first retransmission slots, the mobile phone G sends the first retransmission data to the first earphone T1 through the first CIS link. In the second retransmission slots, the mobile phone G sends the second retransmission data to the second earphone T2 through the first CIS link. In the 10 second slots of the second sub-cycle, after the retransmission slots are selectively configured for the first earphone T1 and the second earphone T2, four second slots are left, and are referred to as remaining slots. The four remaining slots are consecutive slots, and are referred to as remaining slots. The four remaining slots are consecutive slots.

The quantity of transmission slots included in the first sub-cycle, the quantity of transmission slots included in the second sub-cycle, and a quantity of remaining slots in the second sub-cycle are all examples for description. In practical use, there may be more remaining slots in one event cycle, and the remaining slots are all consecutive slots located at a tail of the event cycle. Therefore, the remaining slots are more advantageous for use.

In the conventional technology, transmission slots corresponding to the first earphone T1 and the second earphone T2 in each event cycle are preset fixed parameters. For example, when the transmission slots corresponding to the first earphone T1 and the transmission slots corresponding to the second earphone T2 in each event cycle are preset to be arranged at intervals, if transmission quality of a communication channel of the first earphone T1 is good, and an amount of audio data that needs to be retransmitted is small, in one event cycle, after transmission of all audio data that needs to be retransmitted by the first earphone T1 is completed, the transmission slots corresponding to the first earphone T1 become idle slots. However, because the transmission slots corresponding to the first earphone T1 and the transmission slots corresponding to the second earphone T2 are still arranged at intervals, in the transmission slots corresponding to the second earphone T2, the mobile phone G still sends retransmission data to the second earphone T2, and this may cause a situation that idle slots and the transmission slots corresponding to the second earphone T2 are arranged at intervals. In other words, the idle slots are separated by the transmission slots corresponding to the second earphone T2 and are not consecutive slots. Therefore, the idle slots cannot be effectively used.

In this embodiment of this application, in the second sub-cycle, the mobile phone G configures the retransmission slot for each of the first earphone T1 and the second earphone T2 based on the data receiving status of the first earphone T1 and the data receiving status of the second earphone T2 in the first sub-cycle. Regardless of whether the retransmission slots corresponding to the first earphone T1 and the second earphone T2 are arranged in the serial manner or the interleaved manner, all retransmission slots in the second sub-cycle may be consecutive slots, and the remaining slots in the second sub-cycle are also consecutive slots. This helps effectively use the remaining slots.

In this embodiment of this application, the remaining slots in the second sub-cycle may be used to transmit other service data. For example, in some embodiments, in a remaining second slot, the mobile phone G may transmit communication control signaling to the first earphone T1 or the second earphone T2 through an asynchronous link. The asynchronous link also belongs to a Bluetooth wireless communication link, and is used to transmit control signaling that does not need to be synchronously transmitted, and the like. For example, assuming that, in a communication process, a distance between the first earphone T1 and the mobile phone G becomes larger, a communication parameter such as a modulation scheme or a bandwidth for data transmission between the mobile phone G and the first earphone T1 needs to be updated to adapt to a new distance between the first earphone T1 and the mobile phone G. In this case, the mobile phone G and the first earphone T1 may transmit the communication control signaling in the remaining slot in the second sub-cycle, and negotiate an updated communication parameter for better data transmission.

In some other embodiments, in a remaining second slot, the mobile phone G may transmit service data to a communication device other than the first earphone T1 and the second earphone T2. For example, in addition to the first earphone T1 and the second earphone T2, a device connected to the mobile phone G according to a short-range wireless communication protocol further includes a third device. The third device may be a smartwatch, a health monitoring device, or the like. The mobile phone G may transmit data with the smartwatch or the health monitoring device through an ACL link in the remaining slot in the second sub-cycle.

For example, in an embodiment, it is assumed that when software in the smartwatch needs to be upgraded, an update data packet may be downloaded by using the mobile phone G. In this case, the smartwatch may establish the ACL link with the mobile phone G by using a Bluetooth chip. The mobile phone G may send data in the update data packet to the smartwatch through the ACL link in an idle slot of the CIS link, namely, a remaining slot of a second sub-cycle of each event cycle. Because a software upgrade service does not have a high time requirement, when there is no remaining slot or there are a small quantity of remaining slots in an event cycle, the data in the update data packet may not be sent to the smartwatch in the event cycle, and the data in the update data packet is sent to the smartwatch in a remaining slot in a next event cycle. In another embodiment, the mobile phone G may alternatively send, to the health monitoring device through the ACL link in an idle slot of the CIS link, an instruction for monitoring a user health indicator, and receive, through the ACL link, user health data returned by the health monitoring device.

In some embodiments, in one event cycle, a quantity of slots included in the second sub-cycle may be different from that of the first sub-cycle. For example, it is assumed that in one event cycle, the first sub-cycle includes 14 new transmission slots, and the second sub-cycle includes 8 retransmission slots. Two first retransmission slots need to be configured for the first earphone T1 in the second sub-cycle based on the data amount of the first retransmission data, and six second retransmission slots need to be configured for the second earphone T2 in the second sub-cycle based on the data amount of the second retransmission data.

In a conventional technology, in one event cycle, because quantities of transmission slots corresponding to a first earphone T1 and a second earphone T2 are the same, in the foregoing case, an amount of data that needs to be retransmitted by the first earphone T1 is small, and some idle slots may be left; an amount of data that needs to be retransmitted by the second earphone T2 is large, a quantity of transmission slots is small, and some retransmission data cannot be transmitted. However, in this embodiment of this application, one event cycle is divided into a first sub-cycle and a second sub-cycle. In the second sub-cycle, retransmission slots are configured for the first earphone T1 and the second earphone T2 based on amounts of data that needs to be retransmitted by the first earphone T1 and the second earphone T2. In this hybrid link transmission manner, for the foregoing case, when the amount of data that needs to be retransmitted by the first earphone T1 is small, more second slots may be configured for the second earphone T2 to transmit the data that needs to be retransmitted by the second earphone T2. Compared with the conventional technology, this manner can increase a data retransmission opportunity, and improve data transmission reliability.

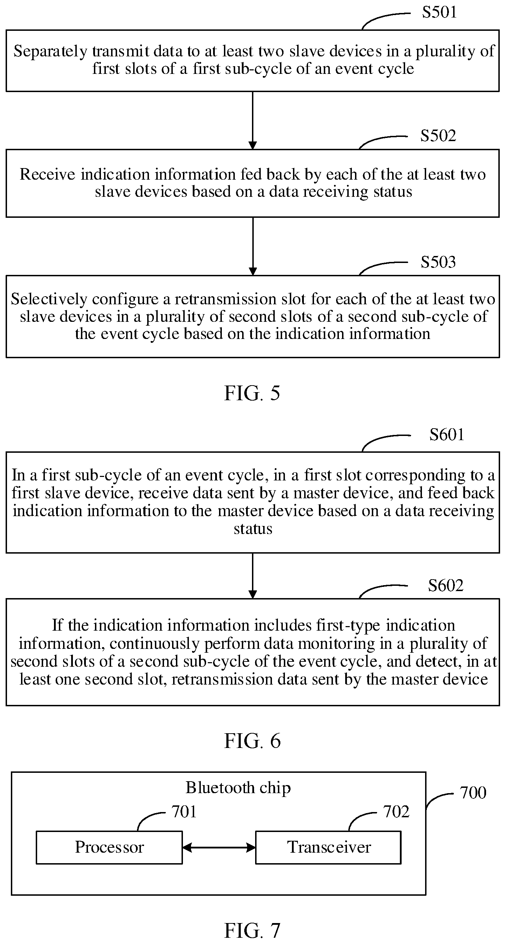

Based on a same inventive concept as the foregoing embodiment, an embodiment of this application provides a data transmission method. The method may be performed by a master device, for example, may be performed by the master device 100 shown in FIG. 1. As shown in FIG. 5, the method may include the following steps.

S501: Separately transmit data to at least two slave devices in a plurality of first slots of a first sub-cycle of an event cycle.

The master device establishes, with each of the at least two slave devices, a Bluetooth synchronous communication link used for data transmission, and separately transmits the data to the at least two slave devices in the plurality of first slots of the first sub-cycle of the event cycle in a serial manner or an interleaved manner.

S502: Receive indication information fed back by each of the at least two slave devices based on a data receiving status.

S503: Selectively configure a retransmission slot for each of the at least two slave devices in a plurality of second slots of a second sub-cycle of the event cycle based on the indication information.

A first slave device is used as an example for description. The first slave device may be any one of the at least two slave devices. The master device configures at least one of the plurality of second slots as a retransmission slot of the first slave device if determining, based on indication information fed back by the first slave device, that there is data that is not successfully received by the first slave device.

Specifically, the master device stores, in a first retransmission data queue, the data that is not successfully received by the first slave device if determining, based on the indication information fed back by the first slave device, that there is the data that is not successfully received by the first slave device. The master device obtains a data amount of first retransmission data stored in the first retransmission data queue, and configures the at least one of the plurality of second slots as the retransmission slots of the first slave device based on the data amount of the first retransmission data.

If the data is separately transmitted to the at least two slave devices in the plurality of first slots in the serial manner, retransmission slots separately configured for the at least two slave devices in the plurality of second slots are arranged in the serial manner. If the data is separately transmitted to the at least two slave devices in the plurality of first slots in the interleaved manner, retransmission slots separately configured for the at least two slave devices in the plurality of second slots are arranged in the interleaved manner.

After a retransmission slot is configured for each slave device, communication control signaling is transmitted to the at least two slave devices or service data is transmitted to a communication device other than the at least two slave devices in a remaining slot of the second sub-cycle. The remaining slot is a second slot that is not configured for any one of the slave devices.

Based on a same inventive concept as the foregoing embodiment, an embodiment of this application further provides a data transmission method. The method may be performed by a first slave device, and the first slave device may be any one of at least two slave devices. For example, the method may be performed by the first slave device 200 shown in FIG. 1. As shown in FIG. 6, the method may include the following steps.

S601: In a first sub-cycle of an event cycle, in a first slot corresponding to the first slave device, receive data sent by a master device, and feed back indication information to the master device based on a data receiving status.

S602: If the indication information includes first-type indication information, continuously perform data monitoring in a plurality of second slots of a second sub-cycle of the event cycle, and detect, in at least one second slot, retransmission data sent by the master device.

The first-type indication information indicates that there is data that is not successfully received by the first slave device. The at least one second slot is a retransmission slot configured by the master device for the first slave device based on the indication information fed back by the first slave device.

Based on a same inventive concept as the foregoing embodiments, an embodiment of this application further provides a data transmission apparatus. The data transmission apparatus may be used in a master device, for example, used in the master device 100 shown in FIG. 1. The master device may include a Bluetooth chip, and the data transmission apparatus may also be used in the Bluetooth chip of the master device. The data transmission apparatus may be configured to implement functions in the foregoing method embodiments, and therefore can achieve beneficial effects of the foregoing method embodiments.

The data transmission apparatus may include a sending unit, a receiving unit, and a configuration unit. The data transmission apparatus is configured to implement functions in the method embodiment shown in FIG. 5. When the data transmission apparatus is configured to implement the functions in the method embodiment shown in FIG. 5, the sending unit may be configured to perform S501, the receiving unit may be configured to perform S502, and the configuration unit may be configured to perform S503. For example, the sending unit is configured to separately transmit data to at least two slave devices in a plurality of first slots of a first sub-cycle of an event cycle. The receiving unit is configured to receive indication information fed back by each of the at least two slave devices based on a data receiving status. The configuration unit is configured to selectively configure a retransmission slot for each of the at least two slave devices in a plurality of second slots of a second sub-cycle of the event cycle based on the indication information.

In a possible implementation, the configuration unit is specifically configured to configure at least one of the plurality of second slots as a retransmission slot of a first slave device if determining, based on indication information fed back by the first slave device, that there is data that is not successfully received by the first slave device, where the first slave device is any one of the at least two slave devices.

In a possible implementation, the sending unit is further configured to transmit communication control signaling to the at least two slave devices or transmit service data to a communication device other than the at least two slave devices in a remaining slot of the second sub-cycle, where the remaining slot is a second slot that is not configured for any one of the slave devices.

In a possible implementation, the configuration unit is specifically configured to: store, in a first retransmission data queue, the data that is not successfully received by the first slave device if determining, based on the indication information fed back by the first slave device, that there is the data that is not successfully received by the first slave device; obtain a data amount of first retransmission data stored in the first retransmission data queue; and configure the at least one of the plurality of second slots as the retransmission slot of the first slave device based on the data amount of the first retransmission data.

In a possible implementation, the sending unit is specifically configured to separately transmit the data to the at least two slave devices in the plurality of first slots in a serial manner or an interleaved manner after the master device establishes, with each of the at least two slave devices, a Bluetooth synchronous communication link used for data transmission. If the data is separately transmitted to the at least two slave devices in the plurality of first slots in the serial manner, retransmission slots separately configured for the at least two slave devices in the plurality of second slots are arranged in the serial manner. If the data is separately transmitted to the at least two slave devices in the plurality of first slots in the interleaved manner, retransmission slots separately configured for the at least two slave devices in the plurality of second slots are arranged in the interleaved manner.

Based on a same inventive concept as the foregoing embodiments, an embodiment of this application further provides a data transmission apparatus. The data transmission apparatus may be used in any slave device, for example, used in the first slave device 200 shown in FIG. 1. The first slave device 200 may include a Bluetooth chip, and the data transmission apparatus may also be used in a Bluetooth chip of any slave device. The data transmission apparatus may be configured to implement functions in the foregoing method embodiments, and therefore can achieve beneficial effects of the foregoing method embodiments.

The data transmission apparatus may include a first monitoring unit and a second monitoring unit. The data transmission apparatus is configured to implement functions in the method embodiment shown in FIG. 6. When the data transmission apparatus is configured to implement the functions in the method embodiment shown in FIG. 6, the first monitoring unit may be configured to perform S601, the second monitoring unit may be configured to perform S602. For example, the first monitoring unit is configured to: in a first sub-cycle of an event cycle, in a first slot corresponding to a first slave device, receive data sent by a master device, and feed back indication information to the master device based on a data receiving status. The second monitoring unit is configured to: if the indication information includes first-type indication information, continuously perform data monitoring in a plurality of second slots of a second sub-cycle of the event cycle, and detect, in at least one second slot, retransmission data sent by the master device, where the at least one second slot is a retransmission slot configured by the master device for the first slave device based on the indication information fed back by the first slave device, and the first-type indication information indicates that there is data that is not successfully received by the first slave device.

Based on a same inventive concept as the foregoing embodiments, an embodiment of this application further provides a data transmission apparatus. The data transmission apparatus may be a Bluetooth chip in a master device or any slave device, or may be a master device or any slave device. The data transmission apparatus may be configured to implement functions in the foregoing method embodiments, and therefore can achieve beneficial effects of the foregoing method embodiments.

In some embodiments, the data transmission apparatus may be a Bluetooth chip. Refer to FIG. 7. The Bluetooth chip 700 may include a processor 701 and a transceiver 702 connected to the processor 701.

Optionally, the processor 701 and the transceiver 702 may be connected to each other through a bus. The processor 701 may be a general-purpose processor, for example, a microprocessor, or another conventional processor. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like.

In an embodiment, when the data transmission apparatus is the Bluetooth chip in the master device, the transceiver 702 is configured to: under control of the processor, separately transmit data to at least two slave devices in a plurality of first slots of a first sub-cycle of an event cycle, and receive indication information fed back by each of the at least two slave devices based on a data receiving status. The processor 701 is configured to selectively configure a retransmission slot for each of the at least two slave devices based on the received indication information in a plurality of second slots of a second sub-cycle of the event cycle.

In a possible implementation, the processor 701 is specifically configured to configure at least one of the plurality of second slots as a retransmission slot of a first slave device if determining, based on indication information fed back by the first slave device, that there is data that is not successfully received by the first slave device, where the first slave device is any one of the at least two slave devices.

In a possible implementation, the transceiver 702 is further configured to transmit communication control signaling to the at least two slave devices or transmit service data to a communication device other than the at least two slave devices in a remaining slot of the second sub-cycle, where the remaining slot is a second slot that is not configured for any one of the slave devices.

In another embodiment, when the data transmission apparatus is the Bluetooth chip in the slave device, the transceiver 702 is configured to: in a first sub-cycle of an event cycle, in a first slot corresponding to the data transmission apparatus, receive, under control of the processor, data sent by a master device. The processor 701 is configured to generate, based on a data receiving status, indication information fed back to the master device. The transceiver 702 is further configured to: send the indication information to the master device; and when the indication information includes first-type indication information, continuously perform data monitoring in a plurality of second slots of a second sub-cycle of the event cycle, and detect, in at least one second slot, retransmission data sent by the master device; and continuously perform data monitoring in the plurality of the second slots of the second sub-cycle of the event cycle, and detect, in the at least one second slot, the retransmission data sent by the master device, where the at least one second slot is a retransmission slot configured by the master device for the data transmission apparatus based on the indication information fed back by the data transmission apparatus, and the first-type indication information indicates that there is data that is not successfully received by the data transmission apparatus.

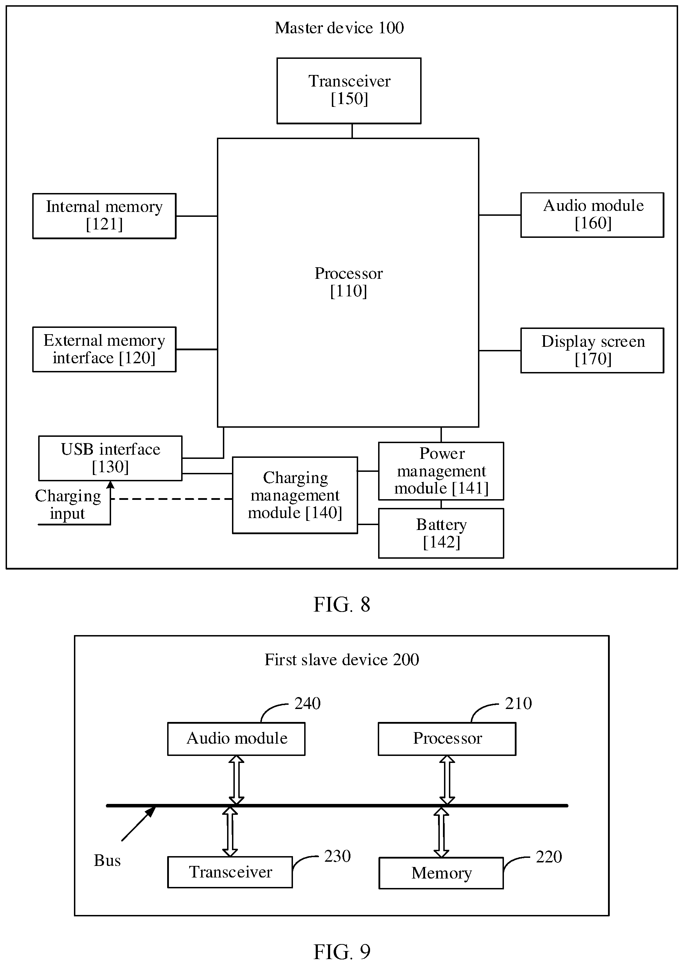

In some other embodiments, the data transmission apparatus may be a master device, and the master device may be a mobile phone, or may be another audio source device that provides a Bluetooth wireless communication function, for example, an electronic device such as a vehicle-mounted terminal, a wearable terminal, a television, or a computer. The following uses the master device 100 shown in FIG. 1 as an example for description. Refer to FIG. 8. The master device 100 may include a processor 110, an external memory interface 120, an internal memory 121, a universal serial bus (universal serial bus, USB) interface 130, a charging management module 140, a power management module 141, a battery 142, a transceiver 150, an audio module 160, and a display screen 170. The transceiver 150 may include a Bluetooth chip, configured to perform short-range data transmission with a slave device.

It may be understood that the schematic structure in this embodiment of this application does not constitute a specific limitation on the master device 100. In some other embodiments of this application, the master device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a controller, a digital signal processor (digital signal processor, DSP), and a baseband processor. Different processing units may be independent components, or may be integrated into one or more processors. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, a mobile industry processor interface (mobile industry processor interface, MIPI), a general-purpose input/output (general-purpose input/output, GPIO) interface, and/or a universal serial bus (universal serial bus, USB) interface.

The charging management module 140 is configured to receive charging input from the charger. The charger may be a wireless charger or a wired charger. In some embodiments of wired charging, the charging management module 140 may receive charging input of a wired charger through the USB interface 130. In some embodiments of wireless charging, the charging management module 140 may receive wireless charging input through a wireless charging coil of the master device 100. When charging the battery 142, the charging management module 140 may further supply power to the master device by using the power management module 141.

The transceiver 150 may implement a mobile communication function and a wireless communication function. For example, the transceiver 150 may include a mobile communication component, configured to implement the mobile communication function. The mobile communication component may include at least one filter, a switch, a power amplifier, a low noise amplifier (low noise amplifier, LNA), and the like. The mobile communication component may receive an electromagnetic wave through an antenna, perform processing such as filtering and amplification on the received electromagnetic wave, and transmit the received electromagnetic wave to the modem processor for demodulation. The mobile communication component may further amplify a signal modulated by the modem processor, and convert the signal into an electromagnetic wave for radiation through the antenna.

The transceiver 150 may include a wireless communication component, configured to implement the wireless communication function. The wireless communication component may include a Bluetooth chip, configured to transmit data to each slave device. For example, the Bluetooth chip may receive to-be-sent data or a signaling signal from the processor 110, perform frequency modulation and amplification on the data or signaling signal, and convert the data or signaling signal into an electromagnetic wave for radiation through the antenna.

The master device 100 may implement an audio function, for example, music playing, through an audio module 160 such as a speaker. The master device 100 may further send, through the transceiver 150 to a slave device such as a Bluetooth earphone or a sound box that provides a Bluetooth wireless communication device, audio data that needs to be played, to implement music playing.

The touch sensor is also referred to as a "touch component". The touch sensor may be disposed on the display screen 170. The touch sensor and the display screen 170 form a touchscreen, which is also referred to as a "touch screen". The touch sensor is configured to detect a touch operation performed on or near the touch sensor. The touch sensor may transfer the detected touch operation to the application processor, to determine a touch event type. Visual output related to the touch operation may be provided through the display screen 170.

The external memory interface 120 may be used to connect to an external memory card, for example, a micro SD card, to extend a storage capability of the master device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application program (for example, a music playing application) required for at least one function, and the like. The data storage area may store data (for example, an audio file or an audio/video file) created in a process of using the master device 100, and the like. In addition, the internal memory 121 may include a high-speed random access memory, and may further include a non-volatile memory, for example, at least one magnetic disk storage device, a flash memory, or a universal flash storage (universal flash storage, UFS).

The processor 110 runs instructions stored in the internal memory 121 and/or instructions stored in the memory disposed in the processor, to perform various function applications and data processing of the master device 100. The internal memory 121 may further store corresponding program code for controlling the transceiver 150 to communicate with another device. When the corresponding program code stored in the internal memory 121 is run by the processor 110, the steps of the data transmission method shown in FIG. 5 may be implemented. Certainly, the related audio data and the program code provided in embodiments of this application may be further stored in an external memory. In this case, the processor 110 may run, through the external memory interface 120, corresponding program code stored in the external memory, to implement the steps of the data transmission method shown in FIG. 5.

In some other embodiments, the data transmission apparatus may be any slave device. The slave device may be a Bluetooth earphone, or may be an audio playing device that has a Bluetooth wireless communication function, for example, a loudspeaker or a sound box. The following uses the first slave device 200 shown in FIG. 1 as an example for description. Refer to FIG. 9. The first slave device 200 may include a processor 210, a memory 220, a transceiver 230, and an audio module 240. The transceiver 230 may include a Bluetooth chip, configured to perform short-range data transmission with a master device. The processor 210, the memory 220, the transceiver 230, and the audio module 240 are connected to each other.

Optionally, the memory 220, the processor 210, the transceiver 230, and the audio module 240 are connected to each other through a bus. The memory 220 is configured to store program code, and the processor 210 may obtain the program code from the memory 220 and perform corresponding processing. The bus may be a PCI bus, an EISA bus, or the like. The bus may be classified into an address bus, a data bus, a control bus, and the like. For ease of representation, only one thick line is used to represent the bus in FIG. 9, but this does not mean that there is only one bus or only one type of bus.

The transceiver 230 may include a Bluetooth chip, configured to transmit data with the master device. For example, after receiving, by using the Bluetooth chip, the audio data sent by the master device, the first slave device 200 transmits the audio data to the processor 210 for processing, and then plays the audio data to the user through the audio module 240.

It may be understood that the memory 220 is configured to store program instructions, data, and the like. Specifically, the program instructions may include program code. The program code includes computer operation instructions. The memory 220 may include a random access memory (random access memory, RAM), or may include a non-volatile memory (non-volatile memory), for example, at least one magnetic disk memory. The processor 210 executes the program instructions stored in the memory 220, to implement the steps in the data transmission method shown in FIG. 6.

Based on the foregoing embodiments, an embodiment of this application further provides a computer program. When the computer program is run on a computer, the computer is enabled to perform any data transmission method according to the foregoing embodiments.

Based on the foregoing embodiments, an embodiment of this application further provides a computer-readable storage medium. The computer-readable storage medium stores a computer program. When the computer program is executed by a computer, the computer is enabled to perform any data transmission method according to the foregoing embodiments.

The storage medium may be any available medium that can be accessed by the computer. The following provides an example but does not impose a limitation. The computer-readable medium may include a RAM, a ROM, an EEPROM, a CD-ROM or another optical disc storage, a disk storage medium or another magnetic storage device, or any other medium that can carry or store expected program code in a form of an instruction or a data structure and can be accessed by a computer.

Based on the foregoing embodiments, an embodiment of this application further provides a chip. The chip is configured to read a computer program stored in a memory, to implement any data transmission method according to the foregoing embodiments.

Based on the foregoing embodiments, an embodiment of this application provides a chip system. The chip system includes a processor, configured to support a computer apparatus in implementing functions related to the master device or the slave device in the foregoing embodiments. In a possible design, the chip system further includes a memory. The memory is configured to store a program and data that are necessary for the computer apparatus. The chip system may include a chip, or may include a chip and another discrete component.

In conclusion, embodiments of this application provide a data transmission method and apparatus. In this solution, a master device transmits data with at least two slave devices based on an event cycle. Each event cycle includes a first sub-cycle and a second sub-cycle. In the first sub-cycle, the master device transmits data to each slave device in a preconfigured transmission slot corresponding to the slave device, and receives indication information fed back by each slave device based on a data receiving status of the slave device. For any one of the at least two slave devices, if indication information fed back by the slave device indicates that there is data that is not successfully received by the slave device, a retransmission slot is configured for the slave device in the second sub-cycle; or if indication information fed back by the slave device indicates that there is no data that is not successfully received by the slave device, no retransmission slot needs to be configured for the slave device in the second sub-cycle. In the second sub-cycle, a second slot that is not configured for any slave device may be referred to as a remaining slot. A retransmission slot is dynamically configured for each slave device in the second sub-cycle based on the indication information of the slave device in the first sub-cycle, so that retransmission slots corresponding to all slave devices in the second sub-cycle can be consecutive slots, and remaining slots in the second sub-cycle are also consecutive slots. This helps effectively use the remaining slots and reduce a waste of air interface resources.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that the computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

The computer program instructions may be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto the computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the protection scope of this application. In this way, this application is intended to cover these modifications and variations of this application provided that they fall within the scope of the claims of this application and their equivalent technologies.

## Claims

1. A data transmission method, comprising:
separately transmitting data to at least two slave devices in a plurality of first slots of a first sub-cycle of an event cycle;
receiving indication information fed back by each of the at least two slave devices based on a data receiving status; and
selectively configuring a retransmission slot for each of the at least two slave devices in a plurality of second slots of a second sub-cycle of the event cycle based on the indication information.

2. The method according to claim 1, wherein the selectively configuring a retransmission slot for each of the at least two slave devices in a plurality of second slots of a second sub-cycle of the event cycle based on the indication information comprises:
configuring at least one of the plurality of second slots as a retransmission slot of a first slave device if determining, based on indication information fed back by the first slave device, that there is data that is not successfully received by the first slave device, wherein the first slave device is any one of the at least two slave devices.

3. The method according to claim 2, wherein after the selectively configuring a retransmission slot for each of the at least two slave devices in a plurality of second slots of a second sub-cycle of the event cycle based on the indication information, the method further comprises:
transmitting communication control signaling to the at least two slave devices or transmitting service data to a communication device other than the at least two slave devices in a remaining slot of the second sub-cycle, wherein the remaining slot is a second slot that is not configured for any one of the slave devices.

4. The method according to claim 2, wherein the configuring at least one of the plurality of second slots as a retransmission slot of a first slave device if determining, based on indication information fed back by the first slave device, that there is data that is not successfully received by the first slave device comprises:
storing, in a first retransmission data queue, the data that is not successfully received by the first slave device if determining, based on the indication information fed back by the first slave device, that there is the data that is not successfully received by the first slave device;
obtaining a data amount of first retransmission data stored in the first retransmission data queue; and
configuring the at least one of the plurality of second slots as the retransmission slot of the first slave device based on the data amount of the first retransmission data.

5. The method according to any one of claims 1 to 4, wherein the separately transmitting data to at least two slave devices in a plurality of first slots of a first sub-cycle of an event cycle comprises:
separately transmitting the data to the at least two slave devices in the plurality of first slots in a serial manner or an interleaved manner.

6. The method according to claim 5, wherein if the data is separately transmitted to the at least two slave devices in the plurality of first slots in the serial manner, retransmission slots separately configured for the at least two slave devices in the plurality of second slots are arranged in the serial manner.

7. The method according to claim 5, wherein if the data is separately transmitted to the at least two slave devices in the plurality of first slots in the interleaved manner, retransmission slots separately configured for the at least two slave devices in the plurality of second slots are arranged in the interleaved manner.

8. The method according to any one of claims 1 to 7, wherein before the separately transmitting data to at least two slave devices in a plurality of first slots of a first sub-cycle of an event cycle, the method further comprises:
establishing, with each of the at least two slave devices, a Bluetooth synchronous communication link used for data transmission.

9. A data transmission method, wherein the method comprises:
in a first sub-cycle of an event cycle, in a first slot corresponding to a first slave device, receiving data sent by a master device, and feeding back indication information to the master device based on a data receiving status; and
if the indication information comprises first-type indication information, continuously performing data monitoring in a plurality of second slots of a second sub-cycle of the event cycle, and detecting, in at least one second slot, retransmission data sent by the master device, wherein the at least one second slot is a retransmission slot configured by the master device for the first slave device based on the indication information fed back by the first slave device, and the first-type indication information indicates that there is data that is not successfully received by the first slave device.

10. A data transmission apparatus, comprising a transceiver and a processor, wherein
the transceiver is configured to: under control of the processor, separately transmit data to at least two slave devices in a plurality of first slots of a first sub-cycle of an event cycle, and receive indication information fed back by each of the at least two slave devices based on a data receiving status; and
the processor is configured to selectively configure a retransmission slot for each of the at least two slave devices in a plurality of second slots of a second sub-cycle of the event cycle based on the indication information.

11. The apparatus according to claim 10, wherein the processor is specifically configured to:
configure at least one of the plurality of second slots as a retransmission slot of a first slave device if determining, based on indication information fed back by the first slave device, that there is data that is not successfully received by the first slave device, wherein the first slave device is any one of the at least two slave devices.

12. The apparatus according to claim 11, wherein the transceiver is further configured to:
transmit communication control signaling to the at least two slave devices or transmit service data to a communication device other than the at least two slave devices in a remaining slot of the second sub-cycle, wherein the remaining slot is a second slot that is not configured for any one of the slave devices.

13. The apparatus according to claim 11, wherein the processor is specifically configured to:
store, in a first retransmission data queue, the data that is not successfully received by the first slave device if determining, based on the indication information fed back by the first slave device, that there is the data that is not successfully received by the first slave device;
obtain a data amount of first retransmission data stored in the first retransmission data queue; and
configure the at least one of the plurality of second slots as the retransmission slot of the first slave device based on the data amount of the first retransmission data.

14. The apparatus according to any one of claims 10 to 13, wherein the transceiver is specifically configured to:
separately send audio data to the at least two slave devices in the plurality of first slots in a serial manner or an interleaved manner.

15. The apparatus according to claim 14, wherein if the transceiver separately transmits the data to the at least two slave devices in the plurality of first slots in the serial manner, retransmission slots separately configured by the processor for the at least two slave devices in the plurality of second slots are arranged in the serial manner.

16. The apparatus according to claim 14, wherein if the transceiver separately transmits the data to the at least two slave devices in the plurality of first slots in the interleaved manner, retransmission slots separately configured by the processor for the at least two slave devices in the plurality of second slots are arranged in the interleaved manner.

17. The apparatus according to any one of claims 10 to 16, wherein the transceiver is further configured to establish, with each of the at least two slave devices, a Bluetooth synchronous communication link used for data transmission before separately transmitting the data to the at least two slave devices in the plurality of first slots of the first sub-cycle of the event cycle.

18. A data transmission apparatus, comprising a transceiver and a processor, wherein
the transceiver is configured to: in a first sub-cycle of an event cycle, in a first slot corresponding to the data transmission apparatus, receive, under control of the processor, data sent by a master device;
the processor is configured to generate, based on a data receiving status, indication information fed back to the master device; and
the transceiver is further configured to: send the indication information to the master device; and when the indication information comprises first-type indication information, continuously perform data monitoring in a plurality of second slots of a second sub-cycle of the event cycle, and detect, in at least one second slot, retransmission data sent by the master device; and continuously perform data monitoring in the plurality of the second slots of the second sub-cycle of the event cycle, and detect, in the at least one second slot, the retransmission data sent by the master device, wherein the at least one second slot is a retransmission slot configured by the master device for the data transmission apparatus based on the indication information fed back by the data transmission apparatus, and the first-type indication information indicates that there is data that is not successfully received by the data transmission apparatus.

19. A data transmission system, comprising:
the data transmission apparatus according to any one of claims 10 to 17; and
at least two data transmission apparatuses according to claim 18.

20. A computer-readable storage medium, storing computer-executable instructions, wherein the computer-executable instructions are used to enable a computer to perform the method according to any one of claims 1 to 8, or perform the method according to claim 9.

21. A computer program product, comprising computer-executable instructions, wherein the computer-executable instructions are used to enable a computer to perform the method according to any one of claims 1 to 8, or perform the method according to claim 9.
